# FASCICULE DE BREVET EUROPEEN

(11) **EP 2 311 353 B1**
(45) Date de publication et mention de la délivrance du brevet: **13.06.2012**
(21) Numéro de dépôt: 10187597.9
(22) Date de dépôt: 14.10.2010
(51) Int. Cl.: A47J 31/40, A47J 31/60

(54) **Machine pour la confection de boissons mixées**
Vorrichtung zur Herstellung von Mischgetränken
Machine for the production of mixed beverages

(30) Priorité: 15.10.2009 FR 0957234
(43) Date de publication de la demande: 20.04.2011
(73) Titulaire: Cafés Folliet, 73000 Chambéry (FR)
(72) Inventeur: Folliet, Bernard, 73000 Chambéry (FR)
(74) Mandataire: Chevalier, Renaud Philippe

(56) Documents cités:
- EP-A1- 2 062 513
- US-A- 4 324 494

## Description

La présente invention se rapporte à une machine pour la fabrication et la distribution de boissons mixées à partir de liquides et/ou de poudres.

Cette machine vise, plus particulièrement, la production de boissons « au verre » les unes après les autres, sans que des résidus de la précédente boisson soient contenus dans la boisson suivante. Les boissons qu'il est possible de produire sur cette machine sont en particulier les suivantes :
- les jus de fruits classiques,
- les jus de fruits mixés, souvent désignés par le terme anglais « Smoothies »,
- des cocktails divers, alcoolisés ou non,
- des soupes,
- des boissons frappées telles que café et chocolat,
- des boissons lactées aromatisées et mixées, habituellement désignées par le terme anglais « Milkshake ».

Pour obtenir des boissons mixées telles que des cocktails ou des jus de fruits mixés à base de concentrés de fruits, il existe actuellement plusieurs procédés et matériels, tous les systèmes connus comportant de nombreux désavantages techniques ou pratiques, même s'ils conduisent à un résultat sensiblement identique dans le verre.

Une première solution existante consiste en l'utilisation d'un mixeur standard, constitué d'une jarre en verre ou en matière plastique transparente, équipée d'un couteau de mixage rotatif. La jarre s'enclenche sur un support contenant un moteur électrique, lequel entraîne en rotation le couteau de mixage. La rotation du moteur est commandée par un simple interrupteur électrique, ou pilotée par un circuit électronique.

De tels mixeurs conviennent pour leur faculté à mixer tout en broyant des glaçons, mais ils restent mal adaptés pour les diverses raisons suivantes :
- le dosage est uniquement manuel et ne constitue donc pas un dosage précis, tel qu'il est souhaité pour la préparation de boissons au verre,
- après le mixage, il faut encore verser manuellement le contenu de la jarre dans un verre,
- un rinçage manuel de la jarre reste nécessaire avant ou après chaque préparation de boisson,
- ces mixeurs restent en général des appareils bruyants, à moins d'être équipés de cloches anti-bruit qui sont des accessoires compliqués à manipuler.

On connaît aussi des mixeurs pourvus de moyens pour le dosage automatique des glaçons et/ou du sirop de fruits et/ou de la quantité d'eau utilisée. Cependant, l'opération de mixage se fait dans une jarre comme précédemment, donc avec les mêmes inconvénients (excepté celui lié au dosage). De plus, les mixeurs spéciaux ici évoqués ont pour inconvénient leur coût très élevé.

Le document de brevet US-A-4324494 décrit une machine pour la fabrication de boissons, par mélange d'ingrédients spécifiques avec de l'eau, et versage de la boisson dans un verre ou un gobelet. Si une boisson fraîche est désirée, ce document propose soit d'ajouter de la glace dans le verre ou gobelet, soit d'alimenter la machine avec de l'eau déjà préalablement refroidie dans une unité de réfrigération. Cette machine comporte un système de rinçage, mais l'eau usée en sort par le même orifice que celui versant les boissons dans le verre ou gobelet utilisé pour boire.

Enfin, il existe un système dit «Revolver» qui réalise le mixage dans le verre ou le gobelet qui sera ensuite utilisé pour boire. Tous les ingrédients de la boisson à produire sont ici dosés dans le récipient individuel, tel que gobelet en carton, dans lequel le consommateur boira cette boisson. Une fois le gobelet rempli, on installe sur celui-ci un «bouchon mixeur», lequel peut être à usage unique ou à usage multiple.

L'ensemble formé par le gobelet et le bouchon mixeur est alors placé dans une petite machine qui bloque le gobelet, et qui fait tourner un couteau de mixage que comporte le bouchon mixeur.

Après le cycle de mixage, l'ensemble précité est retiré de la machine. Si le bouchon mixeur est à usage unique, on le laisse en place, et la préparation de la boisson est terminée. Si le bouchon mixeur est à usage multiple, on le retire mais on doit alors le nettoyer avant l'utilisation suivante.

Un tel système fournit directement des boissons au verre, mais il conserve les inconvénients suivants :
- les temps de préparation et de manipulation, impliqués lors de toute utilisation, sont assez importants surtout dans le cas d'un bouchon mixeur à usage multiple, qu'il faut monter et démonter à chaque opération,
- il est aussi nécessaire de rincer le bouchon mixeur s'il n'est pas à usage unique,
- le coût d'exploitation est important en cas d'utilisation de bouchons mixeurs à usage unique, et dans ce cas la quantité de déchets générée est importante.
- le couteau de mixage est habituellement en matière plastique, rendant celui-ci non adapté pour broyer des glaçons.

La présente invention vise à éviter les inconvénients précédemment exposés, et elle a donc pour but de fournir une machine adaptée pour la confection de boissons mixées produites au verre, capable de réaliser un dosage et de délivrer directement la boisson dans un verre ou un gobelet, la boisson étant alors délivrée à la température souhaitée, et la machine étant adaptée pour le passage d'une boisson à une autre, avec un fonctionnement largement automatisé donc une utilisation simple et rapide, tout en conservant une structure relativement simple et économique, et un coût d'exploitation lui aussi modique.

A cet effet, l'invention a pour objet une machine pour la fabrication et la distribution de boissons mixées, en particulier des boissons fraîches ou glacées, à partir de liquides et/ou de poudres, la machine comprenant :
- un récipient de mélange ouvert à sa partie supérieure, pourvu de moyens de vidange contrôlée ;
- des moyens de mélange conçus pour coopérer avec le récipient de mélange ;
- des moyens mécaniques et/ou électriques d'entraînement en rotation ou en oscillation des moyens de mélange ou du récipient de mélange, aptes à être commandés par des moyens de commande ;
- un dispositif de rinçage automatisé comprenant :
   - des moyens d'amenée d'eau de rinçage dans le récipient de mélange ;
   - des moyens d'évacuation de l'eau de rinçage depuis le récipient de mélange ;
- des moyens d'écoulement contrôlé pour la distribution de la boisson mixée, aptes à coopérer avec les moyens de vidange,
les moyens de mélange comportant un outil d'agitation monté rotatif à l'intérieur du récipient de mélange, l'outil d'agitation étant pourvu d'au moins un couteau pour broyer des glaçons introduits dans ledit récipient de mélange.

Ainsi, l'invention propose une machine destinée à remplir directement des contenants individuels du genre verre ou gobelet, et qui est pourvue d'un dispositif de rinçage automatisé pouvant effectuer un cycle de rinçage en «temps masqué», entre les remplissages de deux verres successifs. Après confection d'une boisson et versement de celle-ci dans un verre, la machine est rincée et rendue prête pour la fabrication de la boisson suivante, sans que subsistent des résidus de la boisson précédente, surtout s'il s'agit de deux boissons de nature différente.

De plus, la machine reste simple et compacte, du fait qu'elle comprend un certain nombre d'éléments intervenant aussi bien dans la confection des boissons que dans le cycle de rinçage, tels que les moyens de mélange, les moyens d'amenée d'eau ou les moyens de vidange. Ainsi, l'outil d'agitation est utilisé pour broyer les glaçons, et il peut aussi être entraîné en rotation durant un cycle de rinçage, pour favoriser le rinçage du récipient de mélange.

Le broyage des glaçons à l'intérieur du récipient de mélange procure une réfrigération quasi-instantanée et permet d'obtenir directement, à la sortie de la machine, une boisson fraîche ou glacée sans glaçons volumineux souvent perçus comme gênants pour la consommation de la boisson.

Dans un mode de réalisation de l'invention, la machine comporte en outre un doseur apte à recevoir et quantifier un volume de liquide et/ou une masse de poudre à introduire dans le récipient de mélange

Avantageusement, le doseur est disposé sur un couvercle surmontant le récipient de mélange, de manière à déverser le volume de liquide et/ou la masse de poudre directement dans le récipient de mélange lorsque le couvercle est placé dans une position fermée dans laquelle ce couvercle vient directement au-dessus du récipient de mélange.

Ainsi, après que le versement d'un volume précis d'un liquide ou d'une masse précise d'une poudre a été effectué dans le doseur, l'utilisateur de la machine peut déverser aisément le contenu du doseur dans le récipient de mélange en amenant simplement le couvercle en position fermée.

Il en résulte une facilité et une rapidité d'utilisation du doseur en particulier lorsque l'utilisateur souhaite doser successivement une pluralité de liquides et/ou poudres pour la réalisation d'une boisson mixée.

Selon un mode de réalisation, les moyens de vidange comportent, à la base du récipient de mélange, un premier orifice et un premier clapet, le premier clapet étant monté mobile sur le récipient de mélange entre une position fermée dans laquelle ce premier clapet obture le premier orifice et une position ouverte dans laquelle ce premier clapet permet l'écoulement de la boisson mixée et/ou de l'eau de rinçage à travers le premier orifice.

Avantageusement, les moyens d'écoulement comportent encore:
- un second orifice ménagé à l'aplomb du premier orifice dans un réceptacle recevant le récipient de mélange ;
- un second clapet monté mobile sur le réceptacle entre une position fermée dans laquelle ce second clapet obture le second orifice et une position ouverte dans laquelle ce second clapet permet l'écoulement de la boisson mixée à travers le second orifice.

Le premier clapet et le second clapet sont des éléments électromécaniques simples permettant de contrôler respectivement la vidange du récipient de mélange et l'écoulement par simple gravité de la boisson mixée à partir du réceptacle, en direction du verre ou gobelet.

A cet égard, le second clapet en position fermée permet l'utilisation des moyens d'évacuation de l'eau de rinçage depuis le réceptacle, en interdisant une distribution de l'eau de rinçage dans le verre, l'eau d'évacuation étant toujours dirigée vers l'extérieur de la machine

Par ailleurs, lorsque le second clapet est en position ouverte, le second orifice, situé à l'aplomb des moyens de vidange, rend inutile toute conduite supplémentaire pour recueillir la boisson mixée à partir du récipient de mélange.

Avantageusement, les moyens d'amenée d'eau de rinçage comportent des moyens à commande électrique d'admission contrôlée de l'eau de rinçage.

Les moyens à commande électrique d'admission contrôlée autorisent ou interrompent l'amenée d'eau de rinçage dans le récipient de mélange, et permettent également de réaliser un dosage de l'eau.

Selon une caractéristique avantageuse, les moyens d'amenée d'eau de rinçage comportent des moyens de mesure du débit de l'eau de rinçage. La mesure du débit de l'eau de rinçage permet d'améliorer la précision du dosage de l'eau.

Dans une forme de réalisation particulière, les moyens d'évacuation de l'eau de rinçage comportent un tuyau partant d'un point bas du réceptacle et dirigé vers l'extérieur de la machine.

Le tuyau permet de vidanger simplement par gravité l'eau de rinçage usée depuis le réceptacle.

D'autres caractéristiques et avantages de la présente invention apparaîtront à la lecture de la description détaillée ci-après d'un mode de réalisation non limitatif, en faisant référence aux dessins annexés sur lesquels :
- la figure 1 est une vue en perspective d'une machine selon l'invention ;
- la figure 2 est une en perspective de côté de la machine de la figure 1 où l'intérieur est visible ;
- la figure 3 est une autre vue en perspective de de la machine de la figure 1 où l'intérieur est visible ;
- les figures 4 et 5 sont des vues en coupe de la partie supérieure de la machine de la figure 1 lorsque le couvercle est respectivement en position ouverte ou en position fermée.

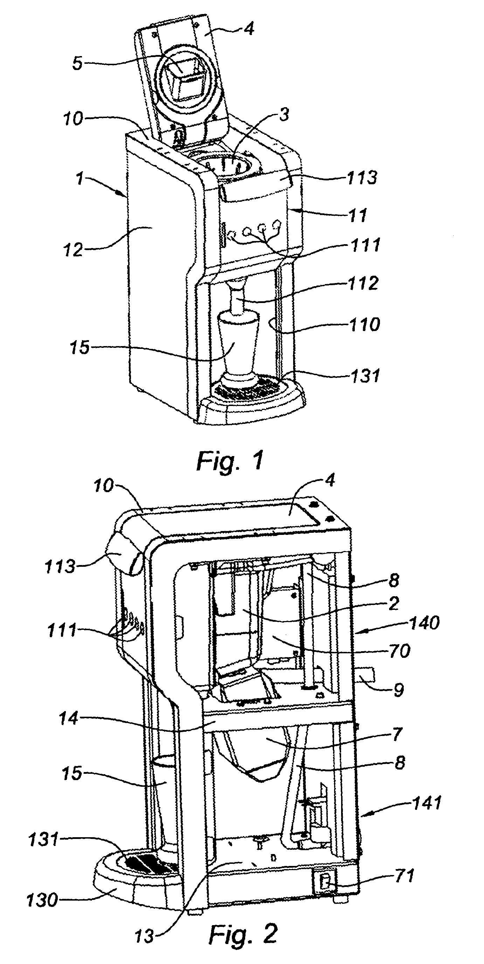

La machine illustrée aux figures 1 à 3 comporte un bâti 1 de forme sensiblement parallélépipédique, le bâti 1 présentant une face supérieure 10, une face avant 11, deux panneaux latéraux 12, un panneau de fond 13 et un panneau arrière. Le panneau arrière n'est pas visible aux figures 1 à 3. Le bâti 1 présente également une plate-forme 14 interne horizontale, délimitant un compartiment supérieur 140 et un compartiment inférieur 141.

Le compartiment supérieur 140 contient un réceptacle 2 pour un bol 3, le bol 3 formant un récipient de mélange ouvert à sa partie supérieure. Le réceptacle 2 n'est pas visible à la figure 1 mais reste visible aux figures 2 à 5.

En outre, un couvercle 4 est monté mobile, par pivotement autour d'un axe X, sur la face supérieure 10 du bâti 1 entre une position ouverte dans laquelle il libère l'accès à l'intérieur du bol 3 et une position fermée dans laquelle il interdit l'accès au bol 3. A cet effet, la face avant 11 du bâti 1 présente une palette 113 d'ouverture du couvercle 4. Le couvercle 4 est muni d'un doseur 5 gradué apte à recevoir et quantifier un volume de liquide et/ou une masse d'une poudre.

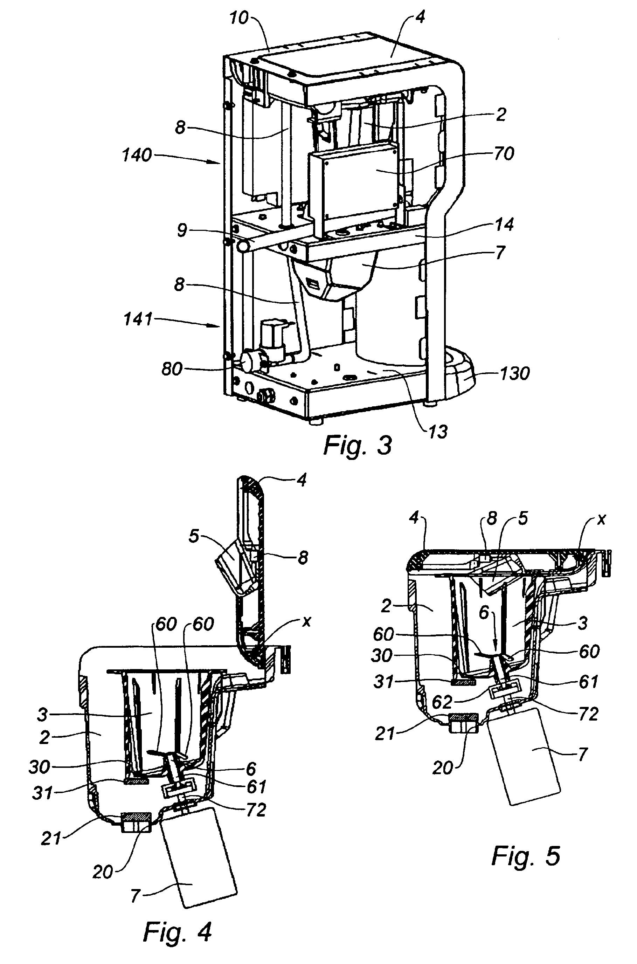

Le doseur 5 est disposé sur la face interne du couvercle 4 de manière à déverser par gravité le volume de liquide et/ou la masse de poudre dans le bol 3 lorsque le couvercle 4 est en position fermée, comme illustré à la figure 5.

Un outil 6 de mélange est monté rotatif à l'intérieur du bol 3. L'outil 6 présente une tige 61 centrale sur laquelle sont montés deux couteaux 60 diamétralement opposés, de préférence métalliques, conçus pour broyer des glaçons. L'outil 6 n'est pas visible aux figures 1 à 3 mais est bien visible aux figures 4 et 5. Cet outil 6 est entraîné en rotation par un arbre 72 d'un moteur 7 électrique. A cet effet, la tige 61 est rendue solidaire de l'arbre 72 par une pièce d'accouplement 62.

Le moteur 7 traverse de part en part la plate-forme 14, et est fixé à cette dernière. Le moteur 7 est contrôlé électriquement par une carte électronique 70, formant une unité de contrôle. En particulier, le temps de rotation et la vitesse de rotation de l'outil 6 sont modulables et contrôlables par l'unité de contrôle.

L'unité de contrôle comporte une interface avec l'utilisateur matérialisée par quatre boutons poussoirs 111 présents sur la face avant 11 du bâti 1. La mise en marche et l'arrêt de l'unité de contrôle sont commandés par un interrupteur 71, placé sur un panneau latéral 12.

La machine illustrée aux figures 1 à 3 est équipée d'un dispositif de rinçage automatisé comportant une conduite 8 d'amenée d'eau de rinçage et un tuyau 9 d'évacuation de l'eau de rinçage usée. Par « eau de rinçage », on doit comprendre une eau courante potable, également adaptée pour la confection de boissons.

La conduite 8 s'étend en hauteur dans le compartiment inférieur 141 et dans le compartiment supérieur 140, depuis le dessus du panneau de fond 13 jusqu'au doseur 5, en traversant la plate-forme 14. Lorsque l'eau de rinçage atteint le doseur 5, celle-ci est déversée dans le bol 3 lorsque le couvercle 4 est disposé en position fermée. L'admission d'eau de rinçage dans la conduite 8 est pilotée par une électrovanne 80, située au point de départ de la conduite 8 et reliée électriquement à l'unité de contrôle. L'unité de contrôle gère notamment la quantité d'eau de rinçage qui parvient dans le bol 3, par contrôle du temps d'ouverture de l'électrovanne 80.

Le tuyau 9 d'évacuation de l'eau de rinçage s'étend le long de la plate-forme 14, à partir d'un point bas du réceptacle 2 jusqu'à traverser le panneau arrière du bâti 1. Le tuyau 9 n'est pas représenté aux figures 4 et 5.

Le bol 3 est pourvu dans sa partie inférieure d'un premier orifice 30 et d'un premier clapet 31. Le premier clapet 31 est monté mobile sur le bol 3 entre une position fermée dans laquelle ce premier clapet 31 obture le premier orifice 30 et une position ouverte dans laquelle ce premier clapet 31 permet l'écoulement de la boisson mixée et/ou de l'eau de rinçage à travers le premier orifice 30. Le premier orifice 30 et le premier clapet 31 permettent ainsi de vidanger le bol 3. Le premier clapet 31 est représenté en position fermée aux figures 4 et 5.

Le réceptacle 2 est pourvu dans sa partie inférieure d'un second orifice 20 et d'un second clapet 21. Le second clapet 21 est monté mobile sur le réceptacle 2 entre une position fermée dans laquelle ce second clapet 21 obture le second orifice 20 et une position ouverte dans laquelle ce second clapet 21 obture permet l'écoulement de la boisson mixée à travers le second orifice 20. A cet égard, le second orifice 20 est ménagé à l'aplomb du premier orifice 30 afin de rentre inutile d'une conduite supplémentaire pour recueillir la boisson mixée à partir du bol 3. Le second clapet 21 est représenté en position fermée aux figures 4 et 5. Le premier clapet 31 et le second clapet 21 sont reliés électriquement à l'unité de contrôle.

Sur la face avant 11 du bâti 1 est ménagé un dégagement 110 permettant de recevoir un verre 15. Une tétine 112 est disposée sous le second orifice 20. Ainsi, après que la boisson mixée s'écoule à travers le second orifice 20, celle-ci est réceptionnée par la tétine 112 puis par le verre 15, recueillant la boisson mixée.

De plus, le panneau de fond 13 se prolonge à l'avant par un demi-disque 130 horizontal formant un support pour le verre 15. En outre, le demi-disque 130 est pourvu d'une grille 131 formant un égouttoir.

Concernant le fonctionnement de la machine, il est nécessaire au préalable de connecter l'électrovanne 80 à une alimentation extérieure en eau potable et de relier le tuyau 9 d'évacuation de l'eau usée à un contenant adapté ou à un réseau d'évacuation des eaux usées. Il est à noter que l'eau de l'alimentation extérieure doit être potable dans la mesure où, en plus d'une fonction de rinçage, l'eau de l'alimentation extérieure est également employée afin de dissoudre des poudres ou se mélanger à des concentrés liquides pour la confection d'une boisson.

Ensuite, après qu'un utilisateur a mis sous tension la machine et placé le couvercle 4 en position fermée, celui-ci met en marche l'unité de contrôle en appuyant sur l'interrupteur 71. L'unité de contrôle engage alors un cycle initial de rinçage. Dans ce but, l'unité de contrôle envoie un signal électrique à l'électrovanne 80 afin d'admettre l'eau de l'alimentation extérieure dans la conduite 8. L'eau admise transite alors dans le doseur 5 jusqu'à parvenir dans le bol 3.

Puis l'unité de contrôle met en marche le moteur 7 afin d'entraîner en rotation l'outil 6 dans le bol 3. L'outil 6 sert alors d'agitateur favorisant le rinçage du bol 3. Le premier clapet 31 et le second clapet 21 sont jusqu'à maintenant maintenus en position fermée.

En fin de rinçage du bol 3, l'unité de contrôle arrête le moteur 7 et envoie un signal électrique au premier clapet 31 afin de l'amener en position ouverte. Ainsi, l'eau de rinçage s'écoule à partir du premier orifice 30 dans le réceptacle 2, le second clapet 21 étant maintenu en position fermée.

Enfin, l'eau de rinçage est évacuée du réceptacle 2 en transitant dans le tuyau 9. Le cycle initial de rinçage est alors terminé et l'unité de contrôle envoie à nouveau un signal électrique au premier clapet 31 afin de le ramener en position fermée.

Dès lors, l'utilisateur peut confectionner une boisson en introduisant successivement un ou plusieurs liquides et/ou poudres de son choix dans le doseur 5. Après que le versage d'un volume précis d'un liquide ou d'une masse précise d'une poudre a été effectué dans le doseur 5, l'utilisateur déverse le contenu du doseur 5 dans le bol 3 par gravité en amenant le couvercle 4 en position fermée. L'utilisateur peut également introduire un ou plusieurs glaçons directement dans le bol 3 avant fermeture du couvercle 4.

Lorsque le dosage des liquides et/ou des poudres ainsi que l'insertion éventuelle des glaçons sont terminés, l'utilisateur actionne un bouton-poussoir 111 sélectionné selon le type de boisson désirée. Par exemple, trois types de boissons sont préprogrammés (jus de fruits, smoothies et cocktails) dans l'unité de contrôle, ce qui correspond à un temps de rotation et une vitesse de rotation de l'outil 6 optimisés pour le type de boisson désiré.

L'unité de contrôle met à nouveau en marche le moteur 7 afin d'entraîner en rotation l'outil 6 dans le bol 3, et ainsi mixer les liquides introduits et/ou poudres dissoutes ainsi que broyer les éventuels glaçons. Lorsque le mixage de la boisson est terminé, l'unité de contrôle arrête le moteur 7 et envoie un signal électrique au second clapet 21 afin l'amener en position ouverte. Puis l'unité de contrôle envoie un signal électrique au premier clapet 31 afin l'amener en position ouverte. Il en résulte un écoulement par simple gravité de la boisson mixée à travers le premier orifice 31 et le second orifice 21, jusqu'à parvenir à la tétine 112 et se déverser dans le verre 15.

L'unité de contrôle envoie alors un signal électrique afin de ramener le premier clapet 31 et le second clapet 21 en position fermée, puis elle engage un nouveau cycle de rinçage tel que décrit précédemment. La machine est ainsi systématiquement rincée, entre les remplissages de deux verres successifs.

En complément, les éléments mécaniques tels que les clapets, l'agitateur, le bol ou récipient de mélange et d'autres parties se trouvant en contact alimentaire sont prévus amovibles et ainsi nettoyables facilement, en fin de période d'utilisation, dans un but de sanitation.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention, telle que définie dans les revendications annexées. C'est ainsi notamment que :
- les clapets 21, 31 peuvent être de tout type ;
- la machine peut ne pas comporter de doseur 5 ;
- le couvercle 4 peut être placé selon une autre disposition ;
- la machine peut ne pas présenter de réceptacle 2 distinct du récipient de mélange 3 ;
- la machine peut présenter des moyens d'entraînement en oscillation du récipient de mélange 3 ;
- la machine peut être utilisée pour le remplissage de tout contenant approprié pour une boisson, tel que gobelet ou tasse, le mot « verre » ne devant pas être interprété de façon restrictive.

## Revendications

1. Machine pour la fabrication et la distribution de boissons mixées, en particulier des boissons fraîches ou glacées, à partir de liquides et/ou de poudres, comprenant :
- un récipient de mélange (3) ouvert à sa partie supérieure, pourvu de moyens de vidange contrôlée (30, 31) ;
- des moyens de mélange (6) conçus pour coopérer avec le récipient de mélange ;
- des moyens mécaniques et/ou électriques d'entraînement en rotation ou en oscillation (7, 72) des moyens de mélange ou du récipient de mélange, aptes à être commandés par des moyens de commande (70) ;
- un dispositif de rinçage automatisé comprenant :
• des moyens d'amenée d'eau de rinçage (8, 80) dans le récipient de mélange ;
• des moyens d'évacuation (9) de l'eau de rinçage depuis le récipient de mélange ;
- des moyens d'écoulement contrôlé (20, 21) pour la distribution de la boisson mixée, aptes à coopérer avec les moyens de vidange (30, 31 ),
les moyens de mélange comportant un outil (6) d'agitation monté rotatif à l'intérieur du récipient de mélange (3), **caractérisée en ce que** l'outil d'agitation est pourvu d'au moins un couteau (60) conçu pour broyer des glaçons introduits dans ledit récipient de mélange (3).

2. Machine selon la revendication 1, comportant en outre un doseur (5) apte à recevoir et quantifier un volume de liquide et/ou une masse de poudre à introduire dans le récipient de mélange (3).

3. Machine selon la revendication 2, dans laquelle le doseur (5) est disposé sur un couvercle (4) surmontant le récipient de mélange (3), de manière à déverser le volume de liquide et/ou la masse de poudre directement dans le récipient de mélange (3) lorsque le couvercle (4) est placé dans une position fermée dans laquelle ce couvercle vient directement au-dessus du récipient de mélange (3).

4. Machine selon l'une des revendications 1 à 3 , dans laquelle les moyens de vidange comportent, à la base du récipient de mélange (3), un premier orifice (30) et un premier clapet (31), le premier clapet (31) étant monté mobile sur le récipient de mélange (3) entre une position fermée dans laquelle ce premier clapet obture le premier orifice (30) et une position ouverte dans laquelle ce premier clapet permet l'écoulement de la boisson mixée et/ou de l'eau de rinçage à travers le premier orifice (30).

5. Machine selon la revendication 4 dans laquelle les moyens d'écoulement comportent :
- un second orifice (20) ménagé à l'aplomb du premier orifice (30) dans un réceptacle (2) recevant le récipient de mélange (3) ;
- un second clapet (21) monté mobile sur le réceptacle (2) entre une position fermée dans laquelle ce second clapet obture le second orifice (20) et une position ouverte dans laquelle ce second clapet permet l'écoulement de la boisson mixée à travers le second orifice (20).

6. Machine selon l'une des revendications 1 à 5, dans laquelle les moyens d'amenée d'eau de rinçage comportent des moyens à commande électrique d'admission contrôlée (80) de l'eau de rinçage.

7. Machine selon la revendication 6, dans laquelle les moyens d'amenée d'eau de rinçage comportent en outre des moyens de mesure du débit de l'eau de rinçage.

8. Machine selon l'une des revendications 5 à 7, dans laquelle les moyens d'évacuation de l'eau de rinçage comportent un tuyau (9) partant d'un point bas du réceptacle (2) et dirigé vers l'extérieur de la machine.

9. Machine selon l'une des revendications 1 à 8, **caractérisée en ce que** l'outil (6) d'agitation est prévu pour être entraîné en rotation durant un cycle de rinçage.

## Claims

1. A machine for making and dispensing mixed beverages, in particular, fresh or iced beverages, from liquids and/or powders, comprising:
- a mixing container (3) open at its upper portion, provided with controlled emptying means (30, 31);
- mixing means (6) designed for cooperating with the mixing container;
- mechanical or electrical means for driving into rotation or into oscillation (7, 72) the mixing means or the mixing container, capable of being controlled by control means (70);
- an automated rinsing device comprising:
• means for admitting rinsing water (8, 80) into the mixing container;
• means (9) for discharging the rinsing water from the mixing container;
- controlled flow means (20, 21) for dispensing the mixed beverage, capable of cooperating with the emptying means (30, 31),
the mixing means including a stirring tool (6) rotatably mounted inside the mixing container (3), **characterized in that** the stirring tool is provided with at least one knife (60) designed for crushing ice cubes introduced into said mixing container (3).

2. The machine according to claim 1, further including a metering device (5) capable of receiving and quantifying a volume of liquid and/or a mass of powder to be introduced into the mixing container (3).

3. The machine according to claim 2, wherein the metering device (5) is positioned on a lid (4) surmounting the mixing container (3) so as to pour the volume of liquid and/or the mass of powder directly into the mixing container (3) when the lid (4) is placed in a closed position in which this lid comes directly above the mixing container (3).

4. The machine according to one of claims 1 to 3, wherein the emptying means include, at the base of the mixing container (3), a first orifice (30) and a first valve (31), the first valve (31) being movably mounted on the mixing container (3) between a closed position in which this first valve obturates the first orifice (30) and an open position in which this first valve allows the mixed beverage and/or of the rinsing water to flow through the first orifice (30).

5. The machine according to claim 4, wherein the flow means include:
- a second orifice (20) made vertically below the first orifice (30) in a receptacle (2) receiving the mixing container (3);
- a second valve (21) movably mounted on the receptacle (2) between a closed position in which this second valve obturates the second orifice (20) and an open position in which this second valve allows the mixed beverage to flow through the second orifice (20).

6. The machine according to one of claims 1 to 5, wherein the means for admitting rinsing water include means with an electric control (80) for controlled admission of the rinsing water.

7. The machine according to claim 6, wherein the means for admitting rinsing water further include means for measuring the flow rate of the rinsing water.

8. The machine according to one of claims 5 to 7, wherein the means for discharging the rinsing water include a pipe (9) from a low point of the receptacle (2) and directed towards the outside of the machine.

9. The machine according to one of claims 1 to 8, **characterized in that** the stirring tool (6) is provided so as to be driven into rotation during a rinsing cycle.

## Patentansprüche

1. Maschine zur Herstellung und Ausgabe von Mischgetränken, insbesondere von kalten oder eisgekühlten Getränken, aus Flüssigkeiten und/oder Pulvern, die umfasst:
- einen in seinem oberen Abschnitt offenen Mischbehälter (3), der mit Mitteln für die kontrollierte Entleerung (30, 31) ausgestattet ist,
- Mischmittel (6), die ausgebildet sind, um mit dem Mischbehälter zusammenzuarbeiten,
- mechanische und/oder elektrische Rotations- oder Schwingungs-Antriebsmittel (7, 72) der Mischmittel oder des Mischbehälters, die imstande sind, von Steuermitteln (70) gesteuert zu sein,
- eine automatisierte Spülvorrichtung, die umfasst:
• Spülwasserzufuhrmittel (8, 80) in den Mischbehälter,
• Spülwasserableitmittel (9) aus dem Mischbehälter,
- kontrollierte Ausflussmittel (20, 21) für die Ausgabe von Mischgetränken, die imstande sind, mit den Entleerungsmitteln (30, 31) zusammenzuarbeiten,
wobei die Mischmittel ein im Mischbehälter (3) rotierend montiertes Rührwerkzeug (6) aufweisen, **dadurch gekennzeichnet, dass** das Rührwerkzeug mit mindestens einem Messer (60) ausgestattet ist, das ausgebildet ist, um in den Mischbehälter (3) eingeführte Eiswürfel zu zerkleinern.

2. Maschine nach Anspruch 1, die ferner einen Messbecher (5) aufweist, der imstande ist, ein Flüssigkeitsvolumen und/oder eine Pulvermenge, die in den Mischbehälter (3) einzubringen sind, aufzunehmen und zu quantifizieren.

3. Maschine nach Anspruch 2, wobei der Messbecher (5) auf einem Deckel (4) über dem Mischbehälter (3) derart angeordnet ist, dass das Flüssigkeitsvolumen und/oder die Pulvermenge direkt in den Mischbehälter (3) geleitet wird, wenn der Deckel (4) in einer geschlossene Stellung platziert ist, in der sich dieser Deckel direkt über dem Mischbehälter (3) befindet.

4. Maschine nach einem der Ansprüche 1 bis 3, wobei die Entleerungsmittel an der Basis des Mischbehälters (3) eine erste Öffnung (30) und ein erstes Klappenventil (31) aufweisen, wobei das erste Klappenventil (31) bewegbar auf dem Mischbehälter (3) zwischen einer geschlossenen Stellung, in der dieses erste Klappenventil die erste Öffnung (30) verschließt, und einer geöffneten Stellung, in der dieses erste Klappenventil das Abfließen des Mischgetränks und/oder des Spülwassers durch die erste Öffnung (30) erlaubt, montiert ist.

5. Maschine nach Anspruch 4, wobei die Abflussmittel umfassen:
- eine zweite Öffnung (20), die gegenüber der ersten Öffnung (30) in eine Aufnahme (2) eingearbeitet ist, die den Mischbehälter (3) aufnimmt,
- ein zweites Klappenventil (21), das bewegbar auf der Aufnahme (2) zwischen einer geschlossenen Stellung, in der dieses zweite Klappenventil die zweite Öffnung (20) verschließt, und einer geöffneten Stellung, in der dieses zweite Klappenventil das Abfließen des Mischgetränks durch die zweite Öffnung (20) erlaubt, bewegbar montiert ist.

6. Maschine nach einem der Ansprüche 1 bis 5, wobei die Spülwasserzufuhrmittel elektrische Steuermittel für den kontrollierten Zufluss (80) von Spülwasser aufweisen.

7. Maschine nach Anspruch 6, wobei die Spülwasserzufuhrmittel ferner Mittel zum Messen des Durchflusses des Spülwassers aufweisen.

8. Maschine nach einem der Ansprüche 5 bis 7, wobei die Mittel zum Ableiten des Spülwassers ein Rohr (9) aufweisen, das von einem Tiefpunkt der Aufnahme (2) ausgeht und nach außerhalb der Maschine gerichtet ist.

9. Maschine nach einem der Ansprüche 1 bis 8, **dadurch gekennzeichnet, dass** das Rührwerkzeug (6) ausgebildet ist, um während eines Spülzyklus rotierend angetrieben zu sein.
